(19) Europäisches Patentamt
European Patent Office
Office européen des brevets

(11) **EP 4 488 436 A1**

(12) **EUROPEAN PATENT APPLICATION**
published in accordance with Art. 153(4) EPC

(43) Date of publication:
08.01.2025 Bulletin 2025/02

(21) Application number: 23763312.8

(22) Date of filing: 21.02.2023

(51) International Patent Classification (IPC):
*D04H 3/16* (2006.01)     *B01D 39/14* (2006.01)
*B01D 39/16* (2006.01)     *B03C 3/28* (2006.01)
*D04H 3/007* (2012.01)

(52) Cooperative Patent Classification (CPC):
**B01D 39/14; B01D 39/16; B03C 3/28; D04H 3/007;
D04H 3/16**

(86) International application number:
**PCT/JP2023/006163**

(87) International publication number:
**WO 2023/167053 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.03.2022 JP 2022032415
27.10.2022 JP 2022172284

(71) Applicant: **Toray Industries, Inc.**
**Tokyo 103-8666 (JP)**

(72) Inventors:
• **TANAKA Yoshiki**
**Otsu-shi, Shiga 520-8558 (JP)**
• **HAYASHI Shingo**
**Otsu-shi, Shiga 520-8558 (JP)**
• **MIZOGAMI Shinobu**
**Otsu-shi, Shiga 520-8558 (JP)**
• **YOSHITOMI Tomohiro**
**Anpachi-gun, Gifu 503-2395 (JP)**

(74) Representative: **Mewburn Ellis LLP**
**Aurora Building**
**Counterslip**
**Bristol BS1 6BX (GB)**

(54) **ELECTRET MELT-BLOWN NONWOVEN FABRIC AND AIR FILTER FILTERING MEDIUM OBTAINED USING SAME**

(57)     In order to obtain an electret melt blown nonwoven fabric having flexibility and high tensile elongation without performing a special post-processing treatment or using a special additive, the electret melt blown non-woven fabric comprising polyolefin-based resin fibers is provided, the electret melt blown nonwoven fabric having a crystallization temperature of 80°C or higher and 130°C or lower and a heat quantity ΔHm of 3.0 J/g or higher and 20.0 J/g or lower at the time of the first temperature rise in the cycle of DSC.

**EP 4 488 436 A1**

**Description**

TECHNICAL FIELD

The present invention relates to an electret melt blown nonwoven fabric having high tensile elongation and an air filter material using the same.

BACKGROUND ART

In recent years, various nonwoven fabric materials have been used for hygienic materials such as disposable diapers and sanitary napkins, and medical supplies such as masks, and there are many use forms in which nonwoven fabrics are in direct contact with human bodies, and so excellent flexibility, stretchability, and the like have been required for the nonwoven fabrics.

As a method of imparting flexibility to nonwoven fabrics, there are a method with post-processing, a method of improving a material itself constituting a nonwoven fabric not to depend on post-processing, and the like. In particular, examples of the method of imparting flexibility by post-processing include a method of kneading a nonwoven fabric using a dyeing machine, a method of causing a nonwoven fabric to undergo a stretching operation by passing through a gap between nip rollers, a tenter, or the like having a speed difference as proposed in Patent Document 1 to mechanically loosen the bond of fibers, and the like. As a method for improving the nonwoven fabric itself, for example, Patent Document 2 discloses that a softened nonwoven fabric is obtained by blending polybutylene with polypropylene (hereinafter, it may be abbreviated as PP) as a raw material. Alternatively, as disclosed in Patent Document 3, a method of adding a smoothing agent to a polymer, spinning the polymer while applying cooling air, and then embossing the polymer is proposed.

PRIOR ART DOCUMENT

PATENT DOCUMENTS

Patent Document 1: Japanese Patent Laid-open Publication No. S63-132625
Patent Document 2: Japanese Patent Laid-open Publication No. H6-93547
Patent Document 3: Japanese Patent Laid-open Publication No. 2000-8259

SUMMARY OF THE INVENTION

PROBLEMS TO BE SOLVED BY THE INVENTION

In general, among nonwoven fabrics, a melt blown nonwoven fabric (hereinafter, this may be abbreviated as an MB nonwoven fabric) has low strength, so, in the method of the related art as disclosed in Patent Documents 1 and 2, when a mechanical external force is applied, the nonwoven fabric itself tends to break, or the surface tends to be fluffed even if it does not break, and there is a problem that the value of the product is impaired. This also applies to a method using a softener, and there is also a problem of an increase in cost incurred by post-processing.

On the other hand, the method as disclosed in Patent Document 3 not only increases the number of steps, but also requires addition of a smoothing agent to the raw material, so there is a problem in reduction in sheet strength and economic efficiency.

Therefore, the present invention has been made in view of the above circumstances, and an object thereof is to provide an electret melt blown nonwoven fabric which is flexible and has a high tensile elongation without performing a special post-processing treatment or using a special additive.

SOLUTIONS TO THE PROBLEMS

As a result of intensive studies, the present inventors have found that forming an electret melt blown nonwoven fabric through processes in which a raw material polyolefin-based resin is discharged from a spinneret, then water is sprayed downstream of the spinneret to form an electret melt blown nonwoven fabric, and a crystallization temperature and a heat quantity $\Delta Hm$ at the time of crystallization of the electret melt blown nonwoven fabric satisfy a specific range enables the electret melt blown nonwoven fabric to have flexibility and high tensile elongation without performing a special post-processing treatment or using a special additive.

The present invention has been completed based on these findings, and according to the present invention, the provided includes the following aspects.

[1] An electret melt blown nonwoven fabric comprising polyolefin-based resin fibers, the electret melt blown nonwoven fabric having a crystallization temperature of 80°C or more and 130°C or less and a heat quantity $\Delta Hm$ being 3.0 J/g or more and 20.0 J/g or less at the time of a first temperature rise in a cycle of DSC.

[2] The nonwoven fabric described in [1] above, in which the polyolefin-based resin fibers have an average fiber refractive index of 1.10 or more and 1.50 or less.

[3] The electret melt blown nonwoven fabric described in [1] or [2] above, in which an average single fiber diameter of the polyolefin-based resin fibers is 0.1 $\mu$m or more and 8.0 $\mu$m or less.

[4] An air filter material made from the electret melt blown nonwoven fabric described in any one of [1] to [3] above.

EFFECTS OF THE INVENTION

According to the present invention, there is provided an electret melt blown nonwoven fabric which is flexible and has high tensile elongation without performing a special post-processing treatment or using a special additive.

EMBODIMENTS OF THE INVENTION

The electret melt blown nonwoven fabric of the present invention is an electret melt blown nonwoven fabric comprising polyolefin-based resin fibers, the electret melt blown nonwoven fabric having a crystallization temperature of 80°C or more and 130°C or less at the time of a first temperature rise in the cycle of DSC, and its heat quantity $\Delta Hm$ thereof being 3.0 J/g or more and 20.0 J/g or less. Hereinafter, the constituent elements of the present invention will be described in detail, but the present invention is not limited to the scope described below at all as long as the gist thereof is not exceeded.

(Polyolefin-Based Resin Fiber)

First, the electret melt blown nonwoven fabric of the present invention includes polyolefin-based resin fibers. By use of fibers composed of a polyolefin-based composition and having high volume resistivity and low water absorption, that is, polyolefin-based resin fibers, as fibers constituting the electret melt blown nonwoven fabric, chargeability and electric charge retaining properties of the electret melt blown nonwoven fabric can be enhanced, and high dust collection efficiency can be achieved from these effects.

In the present invention, examples of the polyolefin-based resin include homopolymers of polyethylene, polypropylene, polybutene, and polymethylpentene. Resins such as copolymers obtained by copolymerizing these homopolymers with different components, and polymer blends of two or more different polymers may also be used. Among them, polypropylene-based resins and polymethylpentene-based resins are preferably used from the viewpoint of charge retention property. In particular, polypropylene-based resins are preferably used from the viewpoint that they can be used at low cost and that they can easily reduce the fiber diameter.

Further, in the present invention, the resin composition in the case of being referred to as a "polyolefin-based resin composition" refers to a resin composition containing 80 mass% or more of a polypropylene homopolymer (or polyethylene homopolymer or the like) and a propylene unit (or ethylene unit or the like) among resins such as a homopolymer of polypropylene (or polyethylene or the like), a copolymer (copolymer) with other components, and a polymer blend with a dissimilar resin. The same applies to other polyolefin-based resins.

The polyolefin-based resin composition of the present invention preferably has a melt flow rate (MFR) of 50 g/10 min or more and 2,500 g/10 min or less as measured under the conditions of a temperature of 230°C, a load of 2.16 kg, and a measurement time of 10 minutes based on "8 A method: Mass measurement method" in JIS K7210-1:2014 "Plastics - Determination of the melt mass-flow rate (MFR) and the melt volume-flow rate (MVR) of thermoplastics - Part 1: Standard test methods". When the melt flow rate of the polyolefin-based resin composition is set to preferably 50 g/10 min or more, more preferably 150 g/10 min or more, it becomes easy to decrease the diameter of the fibers constituting the electret melt blown nonwoven fabric. On the other hand, the strength of the fiber sheet can be improved by setting the melt flow rate of the polyolefin-based resin composition to preferably 2,500 g/10 min or less, and more preferably 2,000 g/10 min or less.

The polyolefin-based resin composition of the present invention may contain a crystal nucleating agent. When the polyolefin-based resin composition contains a crystal nucleating agent, the temperature drop crystallization temperature of the polyolefin-based resin composition increases, and the spun fibers are rapidly solidified, so fusion between the fibers is reduced, and the air permeability of the electret melt blown nonwoven fabric is improved.

Examples of the crystal nucleating agent include sorbitol-based nucleating agents, nonitol-based nucleating agents, chrysitol-based nucleating agents, phosphoric acid-based nucleating agents, triaminobenzene derivative nucleating agents, and carboxylic acid metal salt nucleating agents.

The polyolefin-based resin composition of the present invention can contain at least one type of hindered amine-based additive and/or triazine-based additive in addition to the crystal nucleating agent from the viewpoint of further improving the electret performance of the electret melt blown nonwoven fabric.

Examples of the hindered amine compound include poly[(6-(1,1,3,3-tetramethylbutyl)imino-1,3,5-triazin-2,4-diyl) ((2,2,6,6-tetramethyl-4-piperidyl)imino)hexamethylene((2,2,6,6-tetramethyl-4-piperidyl)imino)] ("CHIMASSORB" (registered trademark) 944LD manufactured by BASF Japan Ltd.), dimethyl succinate-1-(2-hydroxyethyl)-4-hydroxy-2,2,6,6-tetramethylpiperidine polycondensate ("TINUVIN" (registered trademark) 622LD manufactured by BASF Japan Ltd.), and 2-(3,5-di-t-butyl-4-hydroxybenzyl)-2-n-butylmalonate bis(1,2,2,6,6-pentamethyl-4-piperidyl) ("Tinuvin" (registered trademark) 144 manufactured by BASF Japan Ltd.).

In addition, examples of the triazine-based additive include poly[(6-(1,1,3,3-tetramethylbutyl)imino-1,3,5-triazin-2,4-diyl) ((2,2,6,6-tetramethyl-4-piperidyl)imino)hexamethylene((2,2,6,6-tetramethyl-4-piperidyl)imino)] ("Chimassorb" (registered trademark) 944LD manufactured by BASF Japan Ltd.) and 2-(4,6-diphenyl-1,3,5-triazin-2-yl)-5-((hexyl)oxy)phenol ("Tinuvin" (registered trademark) 1577FF manufactured by BASF Japan Ltd.).

The addition amount of the hindered amine-based additive and/or triazine-based additive is preferably 0.5 mass% or more and 5 mass% or less, and more preferably 0.7 mass% or more and 3 mass% or less with respect to the total mass of the polyolefin-based resin composition. By setting the addition amount within this range, an electret melt blown nonwoven fabric excellent in dust collection characteristics is easily obtained.

The content of the hindered amine-based additive and/or the triazine-based additive can be determined, for example, as follows. That is, after the electret melt blown nonwoven fabric is subjected to Soxhlet extraction with a methanol/chloroform mixed solution, HPLC fractionation of the extract is repeated, and the structure of each fraction is confirmed by IR measurement, GC measurement, GC/MS measurement, MALDI-MS measurement, $^1$H-NMR measurement, and $^{13}$C-NMR measurement. The mass of the fractions containing the additive is summed to determine the percentage of the fraction to the entire electret melt blown nonwoven fabric, and this percentage is taken as the content of the hindered amine-based additive and/or the triazine-based additive.

Further, additives such as a heat stabilizer, a weatherproofing agent, and a polymerization inhibitor may be added to the polyolefin-based resin fibers in the polyolefin-based resin composition used in the present invention as long as the effect of the present invention is not impaired.

The polyolefin-based resin fibers used in the electret melt blown nonwoven fabric of the present invention may be composite fibers made of the polyolefin-based resin composition, and may take a composite fiber form of, for example, a core-sheath type, an eccentric core-sheath type, a side-by-side type, a split type, a sea-island type, or an alloy type.

In addition, the polyolefin-based resin fibers are composed of the polyolefin-based resin composition, and have an average single fiber diameter preferably of 0.1 $\mu$m or more and 8.0 $\mu$m or less. The strength of the fiber sheet can be improved by setting the average single fiber diameter to preferably 0.1 $\mu$m or more, more preferably 0.3 $\mu$m or more, and still more preferably 0.5 $\mu$m or more. On the other hand, when the average single fiber diameter is set to 8.0 $\mu$m or less, more preferably 7.0 $\mu$m or less, and further preferably 5.0 $\mu$m or less, the dust collection efficiency of the electret melt blown nonwoven fabric can be improved.

Further, in calculating the average single fiber diameter of the polyolefin-based resin fibers used in the electret melt blown nonwoven fabric, 15 measurement samples of 3 mm $\times$ 3 mm are collected from a total of 15 points including 3 points in the width direction of the fiber sheet (2 points at the side end and 1 points at the center) and 5 points at intervals of 5 cm in the longitudinal direction, the magnification of a scanning electron microscope (for example, "VHX-D 500" manufactured by KEYENCE CORPORATION, and the like) is adjusted to 3000 times, and one fiber surface photograph is taken each from the collected measurement samples to obtain a total of 15 photos. Then, the single fiber diameters of all the fibers whose fiber diameters (single fiber diameters) can be clearly confirmed in the photographs are measured, and the value obtained by rounding off the second decimal place of the arithmetic average value thereof to the first decimal place is taken as the average single fiber diameter.

In addition, in the electret melt blown nonwoven fabric of the present invention, the polyolefin-based resin fibers preferably have an average fiber refractive index of 1.10 or more and 1.50 or less. By setting the average fiber refractive index to preferably 1.10 or more, and more preferably 1.30 or more, voids between fibers are widened, and an electret melt blown nonwoven fabric having high bulkiness, low pressure loss, and high tensile elongation in case of tension can be obtained. On the other hand, by setting the average fiber refractive index to 1.50 or less, and more preferably 1.40 or less, the rigidity of the fibers is increased, and an electret melt blown nonwoven fabric having high form stability can be obtained.

In the present invention, the average fiber refractive index of polyolefin-based resin fibers in the electret melt blown nonwoven fabric can be controlled by performing an appropriate rapid cooling process from one direction immediately after spinning of the polyolefin-based resin fibers. Specifically, control can be performed by blowing cold air from one direction just after spinning (the area immediately below the spinneret), spraying water from one direction on spinning (the area between just under the surface of the spinneret and the collecting section), and the like. Among these, the method of spraying water is most desirable because an electret process can also be performed.

In the above description, the spray amount of water is not particularly limited as long as the spun yarn is in contact with water, and the spray amount may be appropriately adjusted so as to achieve a target fiber refractive index; however, since a drying step at the time of electret processing becomes unnecessary, it is more preferable that the water/polymer percentage [%] described later be 300% or more and less than 500%.

Further, in order to calculate the average fiber refractive index of the polyolefin-based resin fibers, 15 measurement samples of 3 mm × 3 mm are collected from a total of 15 points including three points in the width direction (2 points at the side end and one point at the center) of the nonwoven fabric and 5 points at intervals of 5 cm in the longitudinal direction, the magnification of a scanning electron microscope (for example, "VHX-D 500" manufactured by KEYENCE CORPORATION, and the like) is adjusted to 200 times, and one fiber surface photograph is taken each from the collected measurement samples to make a total of 15 photos. Then, for all fibers whose fiber lengths can be clearly confirmed to be 750 $\mu$m or more in the photographs, the straight line distance (L1) between both ends of the fibers and the actual fiber length (L2) are measured, the respective refractive indices (L2/L1) are calculated, and the value obtained by rounding off the third decimal place of the arithmetic average value thereof to the second decimal place is taken as the average fiber refractive index (unitless).

(Electret melt blown Nonwoven Fabric)

The electret melt blown nonwoven fabric of the present invention includes the polyolefin-based resin fibers. In addition, the electret melt blown nonwoven fabric of the present invention has a crystallization temperature of 80°C or more and 130°C or less at the time of the first temperature rise in the cycle of DSC, and its heat quantity $\Delta$Hm of 3.0 J/g or more and 20.0 J/g or less.

First, by setting the crystallization temperature at the time of the first temperature rise in the cycle of DSC to 80°C or higher, preferably 85°C or higher, and more preferably 90°C or higher, a crystallized area having an appropriate strength can be formed, and an electret melt blown nonwoven fabric having sufficient sheet strength can be obtained. On the other hand, by setting the crystallization temperature at the time of the first temperature rise in the cycle of DSC to 130°C or lower, preferably 115°C or lower, and more preferably 110°C or lower, an area in which crystallization is incomplete can be formed, and an electret melt blown nonwoven fabric having a high tensile elongation at the time of tension can be obtained.

In addition, when the heat quantity $\Delta$Hm of crystallization at the time of the first temperature rise in the cycle of DSC is 3.0 J/g or more, preferably 4.0 J/g or more, and more preferably 5.0 J/g or more, an electret melt blown nonwoven fabric having a sufficient incomplete crystallization area and a high tension elongation at the time of tension can be obtained. On the other hand, by setting the heat quantity $\Delta$Hm of crystallization at the time of the first temperature rise in the cycle of DSC to 20.0 J/g or less, preferably 17.5 J/g or less, and more preferably 15.0 J/g or less, an electret melt blown nonwoven fabric having small shrinkage at the time of heat processing and high form stability can be obtained.

In the present invention, the crystallization temperature at the time of the first temperature rise in the cycle of DSC and the heat quantity $\Delta$Hm thereof refer to values measured and calculated by the following method. That is:

(i) Three 5 mg test pieces are randomly collected from the electret melt blown nonwoven fabric.
(ii) Measurement is performed using a differential scanning calorimeter (for example, "Q100" manufactured by TA Instruments, and the like) by performing the first temperature rise (first temperature rise) → temperature drop (cooling) under the following conditions.

- Measurement atmosphere: Nitrogen stream (50 ml/min)
- Temperature range: 20 to 200°C
- Heating rate: 20 °C/min
- Cooling rate: 20 °C/min
- Sample amount: 5 mg

(iii) For the crystallization temperature, the exothermic peak temperature in the process of the first temperature rise is read. In addition, the heat quantity $\Delta$Hm (J/g) at the time of crystallization is calculated by subtracting an endothermic curve at the time of temperature drop from an exothermic peak at 80°C or higher and 130°C or lower at the time of a temperature rise.
(iv) The measurement is performed three times, and the first decimal place of the arithmetic average value for the crystallization temperature (°C) is rounded off to the closest whole number, and the second decimal place of the arithmetic average value for the heat quantity $\Delta$Hm (J/g) is rounded off to the first decimal place.

In the present invention, the crystallization temperature and the heat quantity $\Delta$Hm of crystallization of the electret melt blown nonwoven fabric at the time of the first temperature rise in the cycle of DSC can be controlled by forming an appropriate amorphous portion in the polyolefin-based resin fibers constituting the electret melt blown nonwoven fabric. Specifically, it can be controlled by changing the type of a polyolefin-based resin to be used, adding an additive such as a crystal nucleating agent or an elastomer, or rapidly cooling the spun polymer by spraying water on spinning.

The electret melt blown nonwoven fabric of the present invention preferably has a basis weight of 3 $g/m^2$ or more and 100 $g/m^2$ or less. By setting the basis weight of the electret melt blown nonwoven fabric to 3 $g/m^2$ or more, more preferably 5 $g/m^2$ or more, and still more preferably 10 $g/m^2$ or more, the dust collection efficiency of the electret melt blown nonwoven fabric can be improved. On the other hand, by setting the basis weight to 100 $g/m^2$ or less, more preferably 70 $g/m^2$ or less, and still more preferably 50 $g/m^2$ or less, it is possible to suppress the collapse of pleated mountains when pleating molding is performed using the electret melt blown nonwoven fabric as an air filter unit.

Further, the basis weight of the electret melt blown nonwoven fabric in the present invention is determined by taking samples of 15 cm×15 cm in length × width from the electret melt blown nonwoven fabric at arbitrary 5 sites, converting the values obtained by measuring the mass of these samples into values per 1 $m^2$, and rounding off the first decimal place of the arithmetic average value ($g/m^2$) of each sample to the closest whole number to calculate the basis weight ($g/m^2$) of the fibrous sheet.

When the thickness of the electret melt blown nonwoven fabric in the present invention is 0.05 mm or more, more preferably 0.08 mm or more, and still more preferably 0.12 mm or more, the strength of the sheet can be further increased, and sheet breakage at the time of processing into an air filter unit can be suppressed. Further, when the thickness is 0.40 mm or less, more preferably 0.35 mm or less, and still more preferably 0.30 mm or less, it is possible to suppress the collapse of pleated mountains when pleating molding is performed using the electret melt blown nonwoven fabric as an air filter unit.

Further, as for the thickness of the electret melt blown nonwoven fabric in the present invention, the thickness of the electret melt blown nonwoven fabric is measured at 10 points at equal intervals in the width direction using a thickness meter (for example, "TECLOCK" (registered trademark) SM-114 manufactured by TECLOCK Corporation, and the like.), and the thickness (mm) of the electret melt blown nonwoven fabric is calculated by rounding off the third decimal place of the average value to the second decimal place.

(Method for Manufacturing Electret melt blown Nonwoven Fabric)

The electret melt blown nonwoven fabric of the present invention can be manufactured, for example, by the following method.

First, the polyolefin-based resin composition is prepared. Next, a yarn is formed while the polyolefin-based resin composition is discharged from a spinneret having a predetermined pore diameter. Air or the like (hereinafter, it may be simply referred to as hot air) heated to about 250°C to 350°C is injected from a certain angle with respect to the yarn immediately after being discharged to reduce the diameter of the yarn, and the yarn is deposited on the yarn collecting section to form a melt blown nonwoven fabric.

After the hot air is injected, the spun polymer can also be rapidly cooled by spraying droplets before it is deposited on the yarn collecting section. Among these, the method of spraying water is most desirable because an electret process can also be performed.

The spray amount of water represented by the following formula is preferably 300% or more and less than 500%:

$$(Wp/Wf) \times 100$$

(in which Wp represents a water discharge mass of the spray nozzle in a unit time per unit width, and Wf represents a discharge mass of the non-electroconductive polymer in a unit time per unit width). If the water/polymer percentage is less than 500%, moisture is sufficiently evaporated by the heat amount of the spun polymer, and even when the polymer discharge amount is small, a high-quality electret melt blown nonwoven fabric can be obtained without the drying step. On the other hand, if the water/polymer percentage is 300% or more, the charge amount of the nonwoven fabric becomes sufficient, and an electret melt blown nonwoven fabric exhibiting high dust collection efficiency can be obtained.

As a droplet spraying device, a single-hole spray nozzle that sprays water droplets in a conical or fan shape from a single hole, a slit-type spray nozzle that sprays water droplets in a band shape from a slit-shaped discharge opening, or the like can be used. In particular, from the viewpoint that even a small amount of water can be uniformly applied in the width direction, it is more preferable to use a spray nozzle that includes a plurality of water discharge openings arranged in the width direction and a pair of air discharge openings that are opened continuously or intermittently in the width direction and are arranged to face each other so as to sandwich the plurality of water discharge openings, and causes air discharged from the air discharge openings to collide with water discharged from the plurality of water discharge openings.

Further, the position where the droplets are injected or sprayed may be between the position where the hot air is injected and the yarn collecting net, but is preferably a position 7.5 cm or more away downward from the spinneret. The distance is more preferably 8 cm or more, and still more preferably 9 cm. In an area less than 7.5 cm from the spinneret, the temperature is high due to heat radiation from the spinneret, and the temperature of the spun yarn itself is also high, so the injection water and the spray water may be partially evaporated. Therefore, by setting the position where the droplets are injected or sprayed to a position 7.5 cm or more downward from the spinneret, the spun yarn is sufficiently hardened to form a yarn, and then the injected or sprayed droplets can be sufficiently spread until the yarn becomes a nonwoven fabric state. As a result, various physical properties of the electret melt blown nonwoven fabric can be improved.

Further, when droplets are not sprayed until the yarn is deposited on the yarn collecting section after hot air is injected, electretization processing is separately performed on the obtained melt blown nonwoven fabric to obtain an electret melt blown nonwoven fabric. The electretization treatment can be performed on a melt blown nonwoven fabric single layer, and can also be performed on a laminated fiber sheet laminated with another fiber sheet.

In this case, as a method of performing electretization treatment, a method of performing electretization by applying water to a non-electroconductive melt blown nonwoven fabric and then drying the non-electroconductive melt blown nonwoven fabric is preferably used. Examples of the method for applying water to the melt blown nonwoven fabric include a method in which a jet flow or a water droplet flow of water is sprayed at a pressure sufficient for water to permeate the inside of the melt blown nonwoven fabric, a method in which water is sucked from one side of the melt blown nonwoven fabric after or while water is applied to permeate water into the melt blown nonwoven fabric, and a method in which the melt blown nonwoven fabric is immersed in a mixed solution of a water-soluble organic solvent such as isopropyl alcohol, ethyl alcohol, or acetone and water to permeate water into the inside of the fiber sheet.

In addition, as a method for drying the electret melt blown nonwoven fabric after water permeates, any conventionally known method can be used. For example, a method such as a hot air drying method, a vacuum drying method, or a natural drying method can be applied. Among them, the hot air drying method is preferable because continuous treatment is possible. In the case of the hot air drying method, the drying temperature needs to be set to a temperature at which the electret is not deactivated. The temperature is preferably 120°C or lower, more preferably 100°C or lower, and still more preferably 80°C or lower. Furthermore, it is more preferable to remove excessive moisture by nip rolls, water suction rolls, suction, or the like as preliminary drying before hot air drying.

In the present invention, it is preferable to use water from which dirt has been removed with a liquid filter or the like and which is as clean as possible as water to be used for spraying droplets between the injection of hot air and the deposition of the yarns on the yarn collecting section or water to be used for separately performing electretization treatment on the melt blown nonwoven fabric. In particular, pure water such as ion-exchanged water, distilled water, and filtrate water that has passed through a reverse osmosis membrane is preferably used. In addition, regarding the level as pure water, the conductivity is preferably $10^3$ $\mu$S/m or less, and more preferably $10^2$ $\mu$S/m or less. In addition, a water-soluble organic solvent such as isopropyl alcohol, ethyl alcohol, or acetone can be mixed with the water as long as the dust collection characteristics are not affected.

(Air Filter Material)

The air filter material of the present invention uses the electret melt blown nonwoven fabric of the present invention. As a method for obtaining the air filter material of the present invention from the electret melt blown nonwoven fabric of the present invention, a known method can be used. For example, the electret melt blown nonwoven fabric of the present invention and the aggregate sheet can be bonded to form a laminated sheet. This aggregate sheet is for collecting relatively large dust and being bonded to the electret melt blown nonwoven fabric to obtain rigidity required as a filter material. As the aggregate sheet, for example, a nonwoven fabric, a woven or knitted fabric, or the like including polyester fibers, polypropylene fibers, rayon fibers, glass fibers, natural pulp, or the like may be used.

The air filter material of the present invention can be used as a filter unit by being incorporated in a sheet form into a frame. In addition, the air filter material can be used as a pleated filter unit set on a frame member by repeatedly performing pleat processing by mountain folding and valley folding.

The air filter material of the present invention is particularly suitable for high-performance applications of air filters in general, particularly air conditioning filters, air purifier filters, and automobile cabin filters.

EXAMPLES

Next, the present invention will be described in detail based on the Examples. The present invention is not limited only to these Examples. Unless otherwise described, each physical property was measured based on the methods described before.

(1) Average single fiber diameter ($\mu$m) of polyolefin-based resin fibers:

Measurement and calculation were performed by the above-described method using "VHX-D500" manufactured by KEYENCE CORPORATION as a scanning electron microscope.

(2) Average fiber refractive index of polyolefin-based resin fiber:
Measurement and calculation were performed by the above-described method using "VHX-D500" manufactured by KEYENCE CORPORATION as a scanning electron microscope.
(3) Crystallization temperature (°C) at the first temperature rise in the cycle of DSC of electret melt blown nonwoven fabric and heat quantity ΔHm of crystallization (J/g) :
Measurement and calculation were performed by the above method using "Q100" manufactured by TA Instruments as a differential scanning calorimeter. Further, in Table 1, they are abbreviated as "crystallization temperature" and "heat quantity ΔHm of crystallization", respectively.
(4) Basis weight (g/m$^2$) of electret melt blown nonwoven fabric:
The basis weight of the electret melt blown nonwoven fabric was measured and calculated by the above method.
(5) Thickness of electret melt blown nonwoven fabric (mm) :
The thickness of the electret melt blown nonwoven fabric was measured and calculated by the above method using "TECLOCK" (registered trademark) SM-114" manufactured by TECLOCK Corporation as a thickness meter.
(6) Tensile strength (N/cm) and tensile elongation (%) of electret melt blown nonwoven fabric:
The tensile strength of the electret melt blown nonwoven fabric was measured according to Method A (strip method) described in "8.14.1 JIS method" of "8.14 Tensile strength and elongation" of JIS L1096:2010 "Testing methods for woven and knitted fabrics" using a Tensilon universal tester "RTG-1250" manufactured by A & D Company, Limited as a tensile tester. Further, the size of the test piece at the time of cutting and collecting was 5 cm in width and 20 cm in length, and the number of the test pieces was 5 in each of the MD direction (longitudinal direction of electret melt blown nonwoven fabric) and the CD direction (width direction of electret melt blown nonwoven fabric). Measurement was performed under the conditions of a grip interval of 10 cm and a tensile speed of 10 cm/min, the value obtained by dividing a load (maximum load when load at cutting is not maximum load) at the time of cutting five test pieces by a width and rounding off the second decimal place of an arithmetic average value (N/cm) thereof to the first decimal place was calculated as a tensile strength (N/cm) of the electret melt blown nonwoven fabric, and the value obtained by rounding off the first decimal place of an arithmetic average value (%) of elongation at the time of cutting (maximum load when the load at the time of cutting is not the maximum load) to the closest whole number was calculated as a tensile elongation (%) of the electret melt blown nonwoven fabric in the MD direction or the CD direction.

[Example 1]

A polypropylene resin containing 1 mass% of a hindered amine-based compound "Chimassorb" (registered trademark) 944 (manufactured by BASF Japan Ltd.) and having a melt flow rate of 850 g/10 min was used. This polypropylene resin was charged into a raw material hopper of a spinning machine, and then a molten polypropylene resin was discharged from a spinneret having a discharge hole having a diameter of 0.4 mm (hole pitch: 1.0 mm) at a temperature of the spinneret of 270°C and a single hole discharge rate of 0.28 g/min/hole. Air (hot air) heated to 300°C was injected at a pressure of 0.025 MPa to the yarn immediately after being discharged from the spinneret, and pure water having an electroconductivity of 90 μS/m was sprayed from the spray nozzle to the yarn at a position 10 cm downward from the spinneret. The spray nozzle includes a plurality of water discharge openings arranged in a width direction of the spinneret, and a pair of air discharge openings that are opened continuously or intermittently in the width direction and arranged to face each other so as to sandwich the plurality of water discharge openings, and sprays water to a spun yarn by colliding air discharged from the air discharge openings with water discharged from the plurality of water discharge openings. Pure water having an electroconductivity of 90 μS/m was sprayed onto the yarn with the spray nozzle at an air pressure of 1.5 MPa at a flow rate of 667 mL/min/m per unit width (1 m) of the spinning width (a direction which is a width direction of the manufacturing line and becomes a width direction (CD direction) of the electret melt blown nonwoven fabric in a subsequent step) so that the water/polymer percentage was 242%. Then, a yarn was deposited on the yarn collecting net whose conveyor speed was adjustable to obtain an electret melt blown nonwoven fabric having a basis weight of 20 g/m$^2$. The measurement results of the physical properties of the electret melt blown nonwoven fabric are shown in Table 1.

[Example 2]

A melt blown nonwoven fabric was manufactured in the same manner as in Example 1 except that the flow rate was 333 mL/min/m, the air pressure was 0.7 MPa, and the water/polymer percentage was 121%, while the flow rate was 667 mL/min/m, the air pressure was 1.5 MPa, and the water/polymer percentage was 242% at the time of spraying pure water onto the yarn in Example 1. The measurement results of the physical properties of the electret melt blown nonwoven fabric are shown in Table 1.

[Example 3]

A melt blown nonwoven fabric was manufactured in the same manner as in Example 1 except that the discharge rate of a single hole was 0.35 g/min/hole, the pressure of hot air was 0.027 MPa, and the water/polymer percentage was 155%, while the discharge rate of a single hole of the polypropylene resin was 0.28 g/min/hole, the pressure of hot air was 0.025 MPa, and the water/polymer percentage at the time of spraying pure water to the yarn was 242% in Example 1. The measurement results of the physical properties of the electret melt blown nonwoven fabric are shown in Table 1.

[Example 4]

A melt blown nonwoven fabric was manufactured in the same manner as in Example 3 except that the water/polymer percentage was 190%, while the water/polymer percentage at the time of spraying pure water onto the yarn was 155% in Example 3. The measurement results of the physical properties of the electret melt blown nonwoven fabric are shown in Table 1.

[Example 5]

A melt blown nonwoven fabric was manufactured in the same manner as in Example 3 except that the water/polymer percentage was 381%, while the water/polymer percentage at the time of spraying pure water onto the yarn was 155% in Example 3. The measurement results of the physical properties of the electret melt blown nonwoven fabric are shown in Table 1.

[Example 6]

A melt blown nonwoven fabric was manufactured in the same manner as in Example 3 except that the water/polymer percentage was 476% while the water/polymer percentage at the time of spraying pure water onto the yarn was 155% in Example 3. The measurement results of the physical properties of the electret melt blown nonwoven fabric are shown in Table 1.

[Comparative Example 1]

A melt blown nonwoven fabric was produced in the same manner as in Example 1 except that the supply of the pure water to the spray nozzle was stopped, and only the air discharged from the air discharge opening of the spray nozzle was blown, while pure water was sprayed onto the yarn using the spray nozzle in Example 1. The measurement results of the physical properties of the melt blown nonwoven fabric are shown in Table 1.

[Comparative Example 2]

A melt blown nonwoven fabric was manufactured in the same manner as in Example 3 except that the supply of the pure water to the spray nozzle was stopped, and only the air discharged from the air discharge opening of the spray nozzle was blown, while pure water was sprayed onto the yarn using the spray nozzle in Example 3. The measurement results of the physical properties of the melt blown nonwoven fabric are shown in Table 1.

[Comparative Example 3]

A melt blown nonwoven fabric was manufactured in the same manner as in Example 3 except that the water/polymer percentage was 95%, while the water/polymer percentage at the time of spraying pure water onto the yarn was 155% in Example 3. The measurement results of the physical properties of the electret melt blown nonwoven fabric are shown in Table 1.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Spinning conditions | Single hole discharge amount [g/min/hole] | 0.28 | 0.28 | 0.35 | 0.35 | 0.35 | 0.35 | 0.28 | 0.35 | 0.35 |
| | Pressure of hot air [MPa] | 0.025 | 0.025 | 0.027 | 0.027 | 0.027 | 0.027 | 0.025 | 0.027 | 0.027 |
| Spraying of water onto yarn | Water/ polymer percentage [%] | 242 | 121 | 155 | 190 | 381 | 476 | 0 | 0 | 95 |
| Average single fiber diameter [μm] of polyolefin-based resin fibers | | 2.3 | 2.4 | 2.4 | 2.5 | 2.4 | 2.5 | 2.5 | 2.4 | 2.4 |
| Average fiber refractive index [-] of polyolefin-based resin fibers | | 1.33 | 1.15 | 1.10 | 1.47 | 1.42 | 1.74 | 1.07 | 1.06 | 1.12 |
| Electret melt blown nonwoven fabric | Crystallization temperature [°C] | 107 | 104 | 105 | 106 | 107 | 106 | – | – | 106 |
| | Heat quantity of crystallization ΔHm [J/g] | 12.7 | 5.8 | 4.0 | 8.1 | 6.6 | 6.9 | – | – | 1.8 |
| | Basis weight [g/m²] | 20 | 20 | 20 | 20 | 20 | 20 | 20 | 20 | 20 |
| | Thickness [mm] | 0.16 | 0.16 | 0.14 | 0.14 | 0.15 | 0.15 | 0.16 | 0.13 | 0.13 |
| | Tensile strength [N/cm] MD direction | 2.1 | 2.0 | 2.0 | 2.0 | 2.2 | 2.3 | 2.2 | 2.5 | 2.4 |
| | Tensile strength [N/cm] CD direction | 1.6 | 1.7 | 2.0 | 2.0 | 2.0 | 1.9 | 1.7 | 2.2 | 2.1 |
| | Tensile elongation [%] MD direction | 79 | 51 | 47 | 44 | 54 | 62 | 55 | 43 | 60 |
| | Tensile elongation [%] CD direction | 110 | 101 | 107 | 116 | 112 | 106 | 70 | 76 | 92 |

As is apparent from Table 1, in Examples 1 to 6 of the present invention, the amount of crystallization heat was generated around 100°C by spraying water on spinning, and from this, it is considered that an amorphous exists in the fibers, and stress is dispersed when the fibers are stretched. In addition, since the average fiber refractive index is also high, there are sufficient gaps between the fibers, and the fibers easily stretch when the sheet is stretched. From these facts, Examples 1 to 6 have a high tensile elongation of 100% or more in the CD direction.

On the other hand, in Comparative Examples 1 and 2 in which water was not sprayed and rapid cooling was performed only with air, the amount of crystallization heat quantity at the time of a temperature rise could not be confirmed, and thus it is considered that the fibers were uniformly crystallized and stress was not dispersed when the fibers were stretched. In addition, since the average fiber refractive index was as low as 1.07 or less, the number of voids between fibers was small. From these, in Comparative Examples 1 and 2, even in the CD direction in which the tensile elongation was high, the tensile elongation was as low as 76% or less, and sufficient effects could not be confirmed.

In addition, in Comparative Example 3 in which the water/polymer percentage was as small as 95%, the average fiber refractive index was 1.12, and there are voids between the fibers. However, since the cooling of the fibers was insufficient, the crystallization heat quantity around 100°C was as low as 1.8 J/g, and stress was not sufficiently dispersed when the sheet was stretched. Therefore, the tensile elongation in the CD direction was as low as 92%, and a sufficient effect could not be confirmed.

As described above, according to the manufacturing method of the present invention, without subjecting to post-processing treatment or adding an elastomer resin, a smoothing agent, or the like, it is possible to provide an electret melt blown nonwoven fabric having flexibility and high tensile elongation of about 100 to 120% in one direction, which cannot be exhibited in a melt blown nonwoven fabric made of conventional polyolefin-based resin fibers.

**Claims**

1. An electret melt blown nonwoven fabric comprising polyolefin-based resin fibers, the electret melt blown nonwoven fabric having a crystallization temperature of 80°C or more and 130°C or less and a heat quantity $\Delta$Hm being 3.0 J/g or more and 20.0 J/g or less at the time of the first temperature rise in the cycle of DSC.

2. The nonwoven fabric according to claim 1, wherein the polyolefin-based resin fibers have an average fiber refractive index of 1.10 or more and 1.50 or less.

3. The electret melt blown nonwoven fabric according to claim 1 or 2, wherein an average single fiber diameter of the polyolefin-based resin fibers is 0.1 $\mu$m or more and 8.0 $\mu$m or less.

4. An air filter material comprising the electret melt blown nonwoven fabric according to claim 1 or 2.

| | | |
|---|---|---|
| **INTERNATIONAL SEARCH REPORT** | International application No. | |
| | **PCT/JP2023/006163** | |

**A. CLASSIFICATION OF SUBJECT MATTER**

*D04H 3/16*(2006.01)i; *B01D 39/14*(2006.01)i; *B01D 39/16*(2006.01)i; *B03C 3/28*(2006.01)i; *D04H 3/007*(2012.01)i
FI:  D04H3/16; B01D39/14 E; B01D39/16 A; B03C3/28; D04H3/007

According to International Patent Classification (IPC) or to both national classification and IPC

**B. FIELDS SEARCHED**

Minimum documentation searched (classification system followed by classification symbols)

D04H1/00-18/04; B01D39/00-39/20; B03C3/00-3/88

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 03/060216 A1 (JAPAN VILENE CO., LTD.) 24 July 2003 (2003-07-24) claims, examples 1, 2, fig. 1 | 1-4 |
| A | JP 2002-161467 A (TORAY INDUSTRIES, INC.) 04 June 2002 (2002-06-04) claims, example 1, fig. 1 | 1-4 |
| A | US 2011/0168024 A1 (CARL FREUDENBERG KG) 14 July 2011 (2011-07-14) claims, paragraphs [0045]-[0053], fig. 1-5 | 1-4 |
| P, A | JP 2022-149681 A (MITSUI CHEMICALS, INC.) 07 October 2022 (2022-10-07) claims, examples 1-3, fig. 1 | 1-4 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/006163**

| Patent document cited in search report | | | Publication date (day/month/year) | Patent family member(s) | Publication date (day/month/year) |
|---|---|---|---|---|---|
| WO | 03/060216 | A1 | 24 July 2003 | US 2005/0077646 A1 claims, examples 1, 2, fig. 1 EP 1471176 A1 | |
| JP | 2002-161467 | A | 04 June 2002 | (Family: none) | |
| US | 2011/0168024 | A1 | 14 July 2011 | WO 2010/031490 A1 claims, p. 12, line 1 to p. 14, line 12, fig. 1-5 EP 2326402 A1 DE 102008047552 A1 CN 102159295 A KR 10-2011-0069080 A | |
| JP | 2022-149681 | A | 07 October 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63132625 A
- JP H693547 A
- JP 2000008259 A